# EUROPEAN PATENT APPLICATION

(11) **EP 3 078 530 A1**
(43) Date of publication of application: **12.10.2016**
(21) Application number: 15162679.3
(22) Date of filing: 07.04.2015
(51) Int. Cl.: B60K 15/04

(54) **A FILLER PIPE FOR FILLING A VEHICLE TANK**

(71) Applicant: Inergy Automotive Systems Research (SA), 1120 Bruxelles (BE)
(72) Inventor: Monge Bonini, Beatriz, B-1040 ETTERBEEK (BE); Van Schaftingen, Jules-Joseph, B-1300 WAVRE (BE); De Man, Pierre, B-1090 BRUSSELS (BE); Dougnier, François, B-3190 BOORTMEERBEECK (BE)
(74) Representative: Remy, Vincent Noel Paul

(57) **Abstract**

It is proposed a filler pipe (2) for filling a vehicle tank (1), the filler pipe having an inner surface and an outer surface, the inner surface defining an inner channel for conveying a compound therethrough. The filler pipe is configured to retain a biological catalyst (3) inside the inner channel. The biological catalyst is adapted to convert the compound into reaction product. The filler pipe comprises means (24) for thermally conditioning the biological catalyst at at least one predetermined temperature range suitable for activation and/or preservation of the biological catalyst.

## Description

The invention relates to a filler pipe for use in a vehicle. In particular it relates to a filler pipe for filling a vehicle tank with a compound, for instance an ammonia precursor.

A decomposition unit for ammonia precursor under the catalysis of a biological catalyst, more particularly a urease enzyme, has been proposed in the international patent application WO2015032811 in the name of applicant. The proposed decomposition unit is located inside the ammonia precursor tank. Such arrangement leads to a reduction of the internal working volume of the ammonia precursor tank. In addition, such arrangement is not convenient for the replacement of the biological catalyst.

In further investigations into such a system, the present inventors have come up with further improvements that enable that the decomposition unit does not reduce the working volume of the tank. These improvements also enable practical, rapid and secure replacement of the biological catalyst.

Accordingly, according to a first aspect, the invention relates to a filler pipe for filling a vehicle tank, the filler pipe having an inner surface and an outer surface, the inner surface defining an inner channel for conveying a compound therethrough. The filler pipe is configured to retain a biological catalyst inside the inner channel. The biological catalyst is adapted to convert the compound into reaction product. The filler pipe is such that it comprises means for thermally conditioning the biological catalyst at at least one predetermined temperature range suitable for activation and/or preservation of the biological catalyst.

Thus, it is proposed a filler pipe with an integrated bio-chemical decomposition unit. Generally, the inner channel of the filler pipe is used for filling operation, for example for conveying a liquid to the tank, where it is stored. Generally, once the filling operation is performed the inner channel of the filler pipe is not used. The invention takes advantage of this available volume. One embodiment of the invention is based on the insight that the biological catalyst may be embedded and retained within the filler pipe and that the filler pipe may be equipped with thermal conditioning means which are configured to thermally activate and/or preserve the biological catalyst. According to the invention the catalysed conversion (i.e. decomposition of the compound) takes place inside the filler pipe. Thus, the filler pipe of the invention is a dual-function filler pipe having a standard function of filling/refilling a vehicle tank, and a function of converting a compound into reaction product.

In a particular embodiment, the compound is an ammonia precursor, such as for instance urea. The ammonia precursor is suitably present as a composition, such as an aqueous composition, more particularly a concentrated aqueous composition. Suitably, the composition is a concentrated urea solution of at least 10% urea. In this embodiment, the reaction products may be for instance ammonia or hydrogen suitable for use in either selective catalytic reduction (SCR) methods for purifying exhaust gases or for fuelling fuel cells. Suitable biological catalysts are herein urease.

In an alternative embodiment, the compound is a hydrogen precursor, such as ammonia or polysaccharide. Good results are known for the enzymatic conversion of a polysaccharide such as sucrose into hydrogen, for instance with enzymes such as invertase, glucose dehydrogenase (GDH), hydrogenase, and glucose isomerase (GI). This may be highly useful to provide hydrogen for use in fuel cells.

The biological catalyst(s) used in the invention may be a composition either in liquid form or in solid form.

The solid form may be a powder or a powder compressed into one or more pellets, granules or beads. Alternatively, it is in the form of capsules, pills or cartridges. Major advantages of cartridges appear that these may be provided in shape and dimensions that allow easy introduction inside the filler pipe, secure retention within the filler pipe and easy removal from the filler pipe. Moreover, cartridges may be provided with coatings to maintain integrity and also to avoid contamination of biological catalyst and/or its composition. In a particular embodiment, cartridges (and/or other solid forms) may further be provided with a liquid composition of biological catalyst inside.

The solid form may further comprise a hydrogel encapsulating the biological catalyst. In a particular embodiment, use is made of a solid substrate onto which the biological catalyst is immobilized. One example of a suitable solid substrate is for instance synthetic polymers such as polystyrene, EVOH, nylon-6 and the like. Alternatively, use may be made of carbohydrates, such as chitosan, dextran and agarose, and porous nanoparticles, for instance of silica.

Advantageously, the thermal conditioning means are attached to the inner surface of the filler pipe. This arrangement allows a good control of the temperature of the biological catalyst. The attachment of the thermal conditioning means to the inner surface of the filler pipe may take place by welding, gluing, clipping, or other appropriate means, taking into account the material/structure of the filler pipe and the material/structure of the thermal conditioning means. In another particular embodiment, the thermal conditioning means can be attached to the outer surface of the filler pipe. In yet another particular embodiment, the thermal conditioning means can be arranged between the inner surface and outer surface of the filler pipe. In this last embodiment, the thermal conditioning means can be made of one piece with the filler pipe. For example, the filler pipe with its integrated thermal conditioning means can be injection moulded or blow moulded or overmoulded.

The thermal conditioning means may comprise e.g. a heater and/or a cooler.

Suitably, the thermal conditioning means furthermore comprise a thermally insulating encapsulation, such that the temperature in the inner channel of the filler pipe can be most easily kept within the desired temperature range independent of the outside temperature and/or the generation of heat upon use of the combustion engine.

Optionally, a cooler may be present, so as to lower the temperature in the inner channel of the filler pipe in case the environmental temperature would be higher.

The heater comprises, in a particular implementation, resistive heating elements, for instance in the form of metallic heating filaments (wires), flexible heaters (i.e. heaters comprising one or more resistive track(s) affixed to a film or placed between two films, or any other type of resistive elements. PTC (positive temperature coefficient) elements are more particularly suitable for heating. Peltier effect cells constitute another example.

In a further embodiment, heat may be transmitted to the filler pipe from heat sources within a vehicle, such as fuel cells, internal combustion engine, and exhaust line. Means for heat transmission are known per se and include, for instance, heat pipes, heat pumps, heat exchangers.

In one further embodiment, the filler pipe can be provided with a temperature sensor and the thermal conditioning means can be controlled by control means on the basis of the sensed temperature. The control means are suitably configured, in one particular embodiment, to control the temperature in the inner channel of the filler pipe (where the biological catalyst(s) is retained) in a predetermined temperature range corresponding to preservation of the biological catalyst(s). In another particular embodiment, the control means herein control that the temperature in the inner channel of the filler pipe remains above a minimum temperature, for instance to prevent freezing of the biological catalyst. In yet another particular embodiment, the control means herein control that the temperature in the inner channel of the filler pipe remains at a predetermined temperature range suitable for activation of the biological catalyst(s). This temperature range is suitably 30-70°C, for instance from 40-60°C.

Advantageously, the filler pipe comprises an entry point for receiving at least one part of the compound from the vehicle tank and an exit point for draining the reaction product out of the filler pipe.

Thus, when decomposition is needed, a predetermined amount of compound is transferred by means of a transfer device from the vehicle tank into the inner channel of the filler pipe (where the biological catalyst(s) is retained) via the entry point. Once the decomposition is performed, the reaction product is evacuated (i.e. drained) out of the filler pipe via the exit point. In a first particular embodiment, the exit point may be coupled to an exhaust gas line for selective catalytic reduction (SCR) of exhaust gases. In a second particular embodiment, the exit point may be coupled to a unit for conversion of the reaction product into hydrogen for fuelling a hydrogen fuel cell. In a third particular embodiment, the exit point may be coupled to a buffer tank. The size of the buffer tank may be chosen in dependence on the specific application and the flow rate of reaction product. In a fourth particular embodiment, the exit point may be directly coupled to an ammonia fuel cell.

A transfer device can be for example a pump, valve, combination of both, gravity, gravity in combination with a valve or a valve in combination with whatever system known by the state of the art to transfer liquid.

According to a further aspect, the invention relates to a system, comprising a vehicle tank for the storage of a compound and a filler pipe as described above.

More particularly, the system of the invention is designed for mounting and use on board of a vehicle, including cars, trucks and motors, using either gasoline, diesel and optionally being a hybrid type that can also be driven on fuel cells.

According to a further aspect, the invention relates to a method of operating the above-mentioned system, comprising the steps of:
- adding a compound into the vehicle tank via the filler pipe;
- adding a biological catalyst in the filler pipe and retaining the biological catalyst inside of the filler pipe;
- conveying (i.e. transferring) at least one part of the compound from the vehicle tank to the filler pipe;
- converting said at least one part of the compound in the filler pipe under catalysis of the biological catalyst.

According to a further aspect, the invention relates to a vehicle equipped with the above-mentioned system.

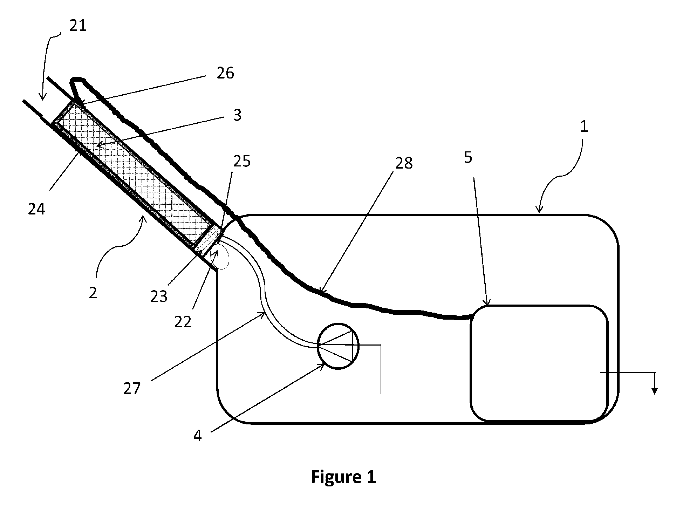

The present invention is illustrated in a non limitative way by the examples below relying on figures 1 to 6 attached. In these figures, identical or similar devices bear identical reference numbers.

The invention is illustrated in the figures 1-6 hereinafter in relation to embodiments, wherein the filler pipe is used for filling/refilling an ammonia precursor tank of a vehicle.

This ammonia precursor is for example an urea solution, more particularly a concentrated urea solution of at least 25 wt% urea, more preferably a urea solution of around 32.5 wt% urea. The term "urea solution" is understood in the context of the present invention, to mean any, generally aqueous, solution containing urea. The invention gives particularly good results with eutectic water/urea solutions for which there is a quality standard; for example, according to the standard ISO 22241, in the case of the AdBlue^{®} solution (a commercial solution of urea), the urea content is between 31.8% and 33.2% (by weight), hence an available amount of ammonia between 18.0% and 18.8%.

While the invention is illustrated hereinafter with reference to the conversion of urea solution, this is merely a specific example. Of course, the invention may also be applied to other compounds on board of a vehicle that need conversion, such as the conversion of ammonia and/or other hydrogen precursors into hydrogen for fuel cells.

Figure 1 is a schematic view of a system according to a first particular embodiment of the present invention.

As illustrated in the example of Figure 1, the system comprises:
- a container (i.e. tank) [1] for the storage of an aqueous urea solution, for example AdBlue® solution (commercial solution of urea); and
- a filler pipe [2] in communication with the tank [1].

In the example of Figure 1, the filler pipe [2] is a hollow tube. The filler pipe [2] has an inlet port [21] through which urea solution can be introduced. Once it is introduced the urea solution exits an outlet port [22] to flow inside the tank [1].

The inlet port [21] is further adapted to allow introduction of a biological catalyst within the filler pipe. The biological catalyst is adapted to convert urea solution into, for example, ammonia or aqua ammonia (i.e. reaction product). For example, an enzyme, such as urease, can be used to decompose the urea solution. Of course, other suitable protein sequence can be used. In the context of the present application, the term "aqua ammonia" is to mean a mixture of effluents resulting from the decomposition of an ammonia precursor. This mixture of effluents may contain ammonium hydroxide (a fraction of which is ionized), residue of ammonia precursor (i.e. part of the ammonia precursor that has not been decomposed) and eventually other products (such as ammonium carbonate and/or ammonium sesqui-carbonate and/or ammonium bicarbonate).

In the example of Figure 1, the inlet port [21] is dimensioned such that a cartridge [3] containing a biological catalyst can be introduced in the filler pipe. For example, the cartridge can have a storage volume ranging from 10 ml up to 1000 ml, or preferably from 50 ml to 600 ml, or more preferably volumes ranging from 100 ml up to 200 ml.

As illustrated in Figure 1, the outlet port [22] of the filler pipe comprises a grid [23] (or a net). The grid [23] prevents the cartridge to fall inside the tank [1]. The grid [23] comprises a plurality of through-holes (not shown), each through-hole being sized to allow the urea solution to flow inside the tank [1]. In a particular embodiment, the grid [23] is attached (welded, glued,...) to the outlet port [22] of the filler pipe. In another particular embodiment, the filler pipe [2] can be made by injection moulding and integrate (as moulded in one piece with it) the grid [23]. Advantageously, the through-holes are further sized so as to allow a predetermined refilling flow rate and to reduce spitback effect during the refilling operation. The grid can also be combined with a conventional anti-spitback mechanism such as a flapper.

The filler pipe [2] further comprises thermal conditioning means [24] which are configured to thermally activate and/or preserve the biological catalyst retained within the filler pipe. In the example of Figure 1, the thermal conditioning means [24] are attached around the inner surface of the filler pipe. For example, the thermal conditioning means [24] can comprise a heater and one or more further thermally conditioning elements. The heater can be provided in the form of a flexible wire. This has the advantage that the heat may be distributed within the interior of the filler pipe. The at least one further thermally conditioning elements can be one or more layers of thermally insulating material.

The filler pipe [2] further comprises an entry point [25] for receiving a predetermined amount of urea solution from the tank [1]. The filler pipe [2] also comprises an exit point [26] for draining the reaction product (obtained after conversion of the urea solution) out of the filler pipe.

In the example of Figure 1, the system comprises a pump [4] arranged inside the tank [1]. The pump [4] is connected to a suction point located inside the tank [1]. The pump [4] is configured to transport the urea solution from the tank to the entry point [25] of the filler pipe, via a fluid line [27].

When decomposition is needed, a predetermined amount of urea solution is transferred by the pump [4] from the tank [1] to the entry point [25] of the filler pipe. Therewith, contact is established between the urea solution and the biological catalyst retained within the filler pipe. Then, the thermal conditioning means [24] are activated such that the temperature within the filler pipe can be held at or can be brought to a predefined temperature within a temperature range suitable for activation of the biological catalyst. Thus, the predetermined amount of urea solution is converted into a reaction product, for example aqua ammonia. The progress of the conversion is suitably controlled by a time-control device or by a chemical sensor. A time-control device can be a clock or any timing mechanism driven by a motor, by the vehicle electronic system or by another mean known by the status of the art. A chemical sensor device can be for example a pH sensor or an ammonia sensor. Alternatively, a physical sensor can be used.

Once the decomposition is performed, the reaction product is evacuated (i.e. drained) out of the filler pipe via the exit point [26]. For example, when the conversion has reached a predefined conversion degree, for instance when 50% or more of the ammonia precursor is converted into ammonia solution, or ideally when at least 80 % or more of the ammonia precursor is converted into aqua ammonia, the resulting effluents (i.e. reaction product) are then transferred to a buffer tank [5] by a transfer device (not shown), via a fluid line [28]. The conversion may continue in this buffer tank (if necessary the effluents of buffer tank may be transferred back to the filler pipe for further conversion).

In the example of Figure 1, the buffer tank [5] is arranged within the tank [1]. In another embodiment, the buffer tank [5] may be arranged outside the tank [1]. As illustrated in Figure 1, one portion of the fluid line [28] is arranged outside the filler pipe and the tank. In another embodiment, the fluid line [28] may be totally arranged inside the filler pipe and/or the tank.

The reaction product stored in the buffer tank [5] can be used in either a selective catalytic reduction (SCR) system for purifying exhaust gases or for fuelling fuel cells operating on the basis of ammonia or hydrogen. The reaction product may be transferred to such system by means of a transfer device (not shown), for example a pump.

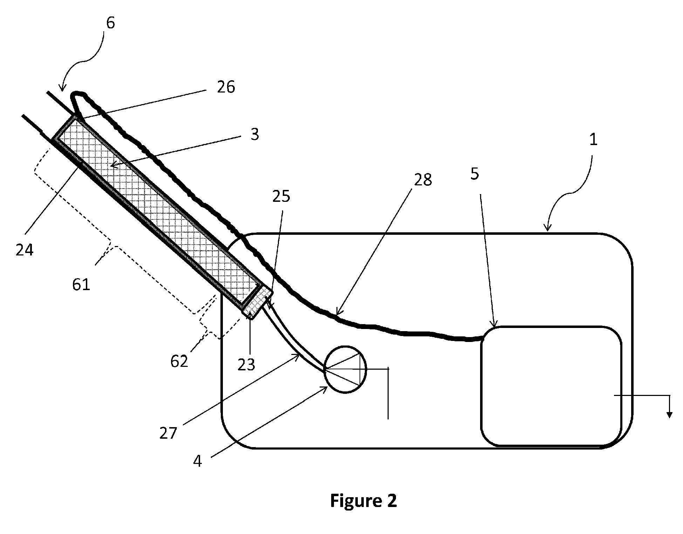

Figure 2 is a schematic view of a system according to a second particular embodiment of the present invention.

The example of Figure 2 differs from the example of Figure 1 in that the filler pipe [6] of Figure 2 has an external portion [61] extending outside of the tank [1] and an internal portion [62] extending inside of the tank [1]. The internal portion [62] provides an additional storage volume for storing the biological catalyst. Thus, the storage volume of the biological catalyst can be increased without increasing the external footprint of the system. Accordingly, a greater amount of reaction product can be generated.

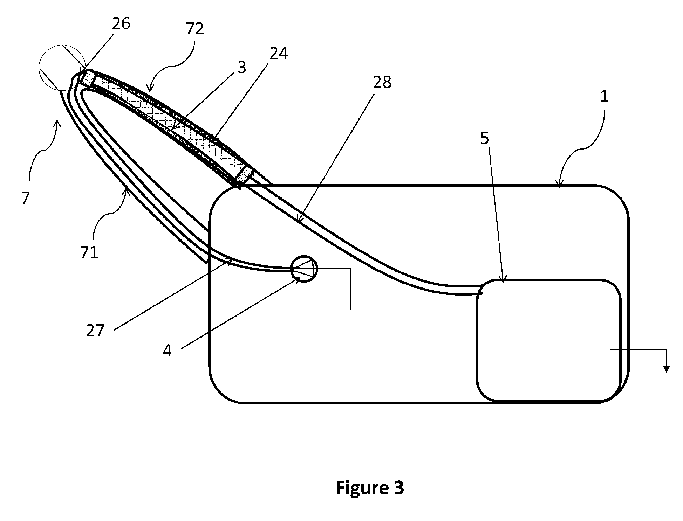

Figure 3 is a schematic view of a system according to a third particular embodiment of the present invention.

The example of Figure 3 differs from the example of Figure 1 in that the filler pipe [7] of Figure 3 has a first channel [71] which is configured for conveying urea solution to the tank [1] and a second distinct channel [72] for the storage of the biological catalyst. This arrangement allows to increase the lifetime of the biological catalyst. Indeed, the biological catalyst is not in contact with the urea solution during the refilling operation. In other words, the biological catalyst is separated from the urea solution, when the decomposition of the urea solution is not desired. It also allows refilling without necessarily removing the biological catalyst from the filler pipe As illustrated, the thermal conditioning means [24] are attached around the inner surface of the second channel. In this example, the second channel [72] is a slightly bend hollow tube.

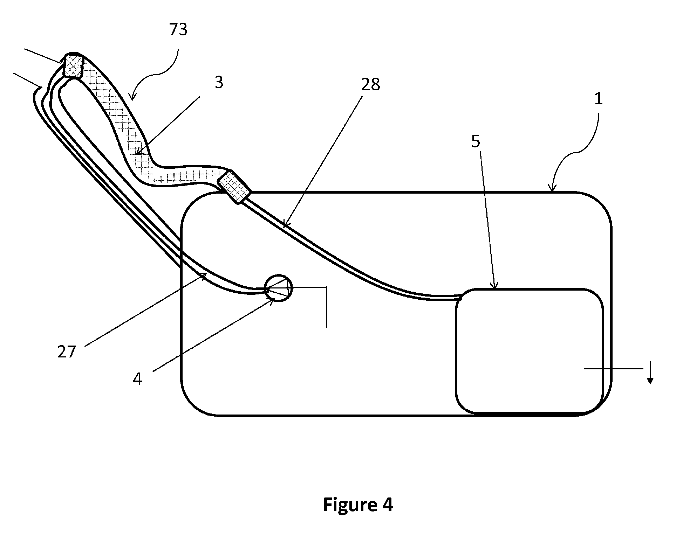

Figure 4 is a schematic view of a system according to a fourth particular embodiment of the present invention.

The example of Figure 4 differs from the example of Figure 3 in that the second channel [73] is a curved (or a serpentine shape) hollow tube.

It is to note that Figures 1 to 4 are schematic views and for reason of clarity all components of the system are not represented. Systems illustrated in Figures 1 to 4 can comprise other components, for example check valves, level sensors, quality sensors or buffers.

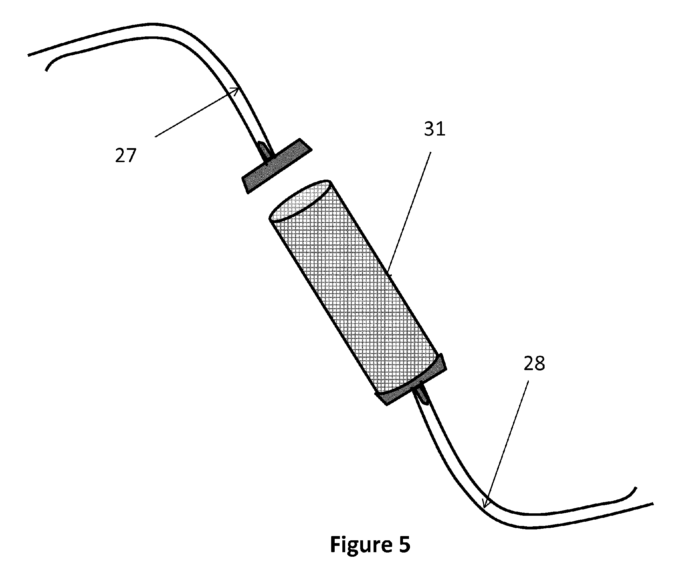

Figure 5 is a schematic view of a cartridge [31] for the storage of biological catalyst according to a particular embodiment. The cartridge walls can be made out of flexible polymeric material, forming a cylindrical tube with top and bottom connectors that allow the urea solution to enter and exit the cartridge while keeping the biological catalyst trapped inside. Due to its flexible nature, the cartridge can be easily introduced through the filler pipe just by gently pushing it down. After a period of time corresponding to the duration of the activity of the biological catalyst, the cartridge can be easily removed from the filler pipe by pulling it up.

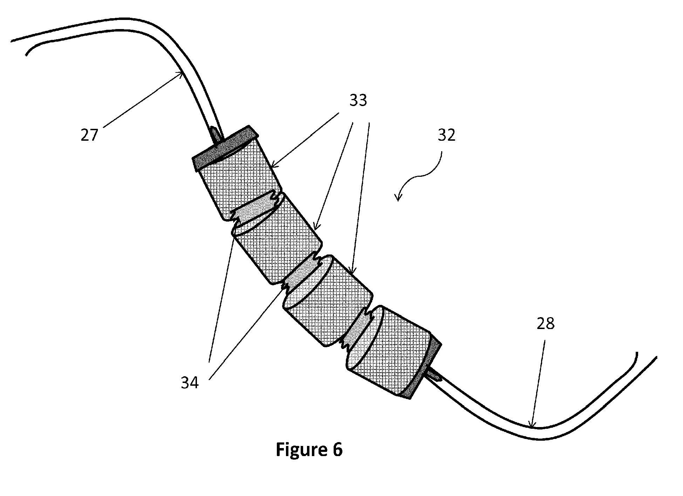

Figure 6 is a schematic view of a cartridge [32] for the storage of biological catalyst according to an alternative embodiment. In this alternative embodiment, the cartridge comprises a plurality of cylinders [33] (i.e. storage units) which are linked to each other by flexible connectors [34]. This design allows a high degree of flexibility and adaptability of the cartridge to different shapes of filler pipes. Whilst the principles of the invention have been set out above in connection with specific embodiments, it is to be understood that this description is merely made by way of example and not as a limitation of the scope of protection which is determined by the appended claims.

## Claims

1. A filler pipe (2) for filling a vehicle tank (1), the filler pipe having an inner surface and an outer surface, the inner surface defining an inner channel for conveying a compound therethrough, the filler pipe being configured to retain a biological catalyst (3) inside the inner channel, the biological catalyst being adapted to convert the compound into reaction product, wherein the filler pipe comprises means (24) for thermally conditioning the biological catalyst at at least one predetermined temperature range suitable for activation and/or preservation of the biological catalyst.

2. The filler pipe as claimed in claim 1, wherein the thermal conditioning means are attached to the inner surface of the filler pipe.

3. The filler pipe as claimed in any of the preceding claims, wherein it comprises an entry point for receiving at least one part of the compound from the vehicle tank and an exit point for draining out the reaction product.

4. The filler pipe as claimed in any of the preceding claims, wherein it comprises a perforated element or a perforated portion having at least one through-hole, the through-hole being arranged and sized such that the compound passes through the through-hole and flow in the vehicle tank, and such that the biological catalyst is retained within the filler pipe.

5. The filler pipe as claimed in any of the preceding claims, wherein the thermal conditioning means are a heater, a resistive heater, Peltier effect cells, insulating elements, phase change materials.

6. A system, comprising:
- a vehicle tank for the storage of a compound, and
- a filler pipe as claimed in any of the claims 1-5.

7. The system as claimed in claim 6, wherein the compound is an ammonia precursor or a hydrogen precursor.

8. A method of operating a system as claimed in any of the claims 6-7, comprising the steps of:
- adding a compound into the vehicle tank via the filler pipe;
- adding a biological catalyst in the filler pipe and retaining the biological catalyst inside of the filler pipe;
- conveying at least one part of the compound from the vehicle tank to the filler pipe;
- converting said at least one part of the compound in the filler pipe under catalysis of the biological catalyst into reaction product.

9. A vehicle comprising a system as claimed in any of the claims 6-7.
